# EUROPÄISCHE PATENTANMELDUNG

(11) **EP 4 840 575 A1**
(43) Veröffentlichungstag der Anmeldung: **18.11.2026**
(21) Anmeldenummer: 25176611.9
(22) Anmeldetag: 15.05.2025
(51) Int. Cl.: B23K 26/00, B23K 26/28, B23K 26/323, B23K 33/00, B23K 103/12, B23K 103/22

(54) **VENTILELEMENT**

(71) Anmelder: Georg Fischer JRG AG, 4450 Sissach (CH)
(72) Erfinder: AKCAY, Ali, 4132 Muttenz (CH); NASDALA, Björn, 79539 Lörrach (DE); BELSER, Roman, 4468 Kienberg (CH); BÜRLI, Stephan, 4402 Frenkendorf (CH)
(74) Vertreter: Fenner, Seraina

(57) **Zusammenfassung**

Verfahren zum Herstellen eines Ventilelements für trinkwasserführende Rohrleitungssysteme, wobei das Ventilelement einen Ventilkörper und mindestens ein Anschlussstück aufweist, wobei der Ventilkörper durch Giessen als separates Bauteil vorgefertigt wird und das Anschlussstück in einem beliebigen Fertigungsverfahren als separates Bauteil vorgefertigt und anschliessend mittels der Stirnseite an der Stirnseite des Ventilkörpers angeschweisst wird, wobei das Anschlussstück und der Ventilkörper sich über Kontaktflächen der Stirnseiten kontaktieren, wobei ein Laser zum Anschweissen des Anschlussstücks zu mindestens einem Bereich der Kontaktflächen der Stirnseiten parallel verläuft.

## Beschreibung

Die Erfindung betrifft ein Verfahren zum Herstellen eines Ventilelements für trinkwasserführende Rohrleitungssysteme und das Ventilelement selbst, wobei das Ventilelement einen Ventilkörper und mindestens ein Anschlussstück aufweist, wobei der Ventilkörper durch Giessen als separates Bauteil vorgefertigt wird und das Anschlussstück in einem beliebigen Fertigungsverfahren als separates Bauteil vorgefertigt und anschliessend mittels der Stirnseite an der Stirnseite des Ventilkörpers angeschweisst wird, wobei das Anschlussstück und der Ventilkörper sich über Kontaktflächen der Stirnseiten kontaktieren.

Aus dem Stand der Technik ist eine grosse Vielfalt an trinkwasserführenden Armaturen bekannt, da es eine Menge an unterschiedlichen Systemen im Haustechnikbereich gibt, die wiederum viele unterschiedliche Anschlussmöglichkeiten wie auch dimensionsspezifische Ausführungsformen beinhalten. Dies hat zur Folge, dass eine Armatur mit einem Grundkörper in vielen unterschiedlichen Ausführungsformen vorliegen muss, was den Nachteil bei einem Gussteil beinhaltet, dass für jede spezifische Ausführungsform ein Gussmodell vorhanden sein muss, was ein grosses Lager für alle unterschiedlichen Gussmodelle bedarf, so wie hohe Unterhaltskosten der Gussmodelle mit sich bringt. Zudem fällt die Stückzahl beim Giessen je Ausführungsform entsprechend gering aus. Des Weiteren erfordert es eine hohe Logistik und ein grosses Teilelager an Armaturen, da alle Ausführungsformen vorliegen sollten.

Die EP 1 561 982 A1 offenbart ein Gehäuse einer Armatur das aus mindestens zwei Teilen hergestellt ist, wobei die Teile durch Hydroformung gebildet sind und anschliessend zusammengeklebt oder geschweisst werden. Nachteilig hierbei ist, dass das Gehäuse aufgrund der Herstellung durch Hydroformung als Blechteil ausgebildet ist und der Einsatzbereich damit limitiert ist.

Es ist Aufgabe der Erfindung ein Verfahren zur Herstellung eines Ventilelements und ein Ventilelement für trinkwasserführenden Rohrleitungssysteme vorzuschlagen, das kostengünstig in der Herstellung und Logistik ist und dennoch alle Ausführungsformen und Dimensionen abdeckt.

Diese Aufgabe wird erfindungsgemäss dadurch gelöst, dass ein Laser zum Anschweissen des Anschlussstücks zu mindestens einem Bereich der Kontaktflächen der Stirnseiten parallel verläuft.

Beim erfindungsgemässen Verfahren zum Herstellen eines Ventilelements für trinkwasserführende Rohrleitungssysteme, wobei das Ventilelement einen Ventilkörper und mindestens ein Anschlussstück aufweist, besteht darin, dass das Anschlussstück am Ventilkörper angeschweisst wird, wobei vor dem Anschweissen die Gusshaut entfernt wird. Der Ventilkörper wird in einem vorausgehenden Herstellschritt durch Giessen als separates Bauteil vorgefertigt. Ebenso wird das Anschlussstück in einem vorausgehenden beliebigen Fertigungsverfahren als separates Bauteil vorgefertigt. Das Anschlussstück kann durch ein abtragendes Herstellungsverfahren, wie Drehen oder Fräsen hergestellt werden, wie auch durch ein auftragendes Herstellverfahren wie z.B. 3D-Druck oder Sintern, oder wenn das Anschlussteil als Blechteil ausgebildet ist durch Pressen, Biegen, Stanzen oder Tiefziehen.

Nachdem der separate Ventilkörper und mindestens ein separates Anschlussstück vorliegen wird das Anschlussstück an den Ventilkörper angeschweisst. Dazu werden die Stirnseite des Anschlussstücks und des Ventilkörpers miteinander kontaktiert. Ein Laser ist zum Anschweissen des Anschlussstücks mindestens zu einem Bereich der Kontaktflächen der Stirnseiten parallel ausgerichtet. Das heisst, wenn die Kontaktfläche einer Stirnseite unterschiedlich zur Längsachse geneigte Bereiche aufweist, ist der Laser zu mindestens einem dieser Bereich, die vorzugsweise als Ringflächen entlang der Stirnseite verlaufen, parallel ausgerichtet. Wobei die Bereiche der Kontaktflächen des Anschlussstücks und des Ventilkörpers jeweils ineinander ragen, so dass die Bereiche der Kontaktflächen sich gegenseitig kontaktieren.

Um einen optimalen Stoffschluss und eine eindeutige Kontaktfläche zwischen den Teilen zu erreichen, wird vor dem Anschweissen des Anschlussstücks an den Ventilkörper die Gusshaut im Bereich der Schweissstelle zwischen Anschlussstück und Ventilkörper am Ventilkörper entfernt. Dadurch können auch die unterschiedlichen Bereiche bzw. Ringflächen an der Kontaktfläche eingebracht werden, wobei der Laser mindestens zu einer dieser Bereiche parallel verläuft.

Als vorteilhaft hat sich gezeigt, wenn zum Entfernen der Gusshaut am Ventilkörper die Schweissstelle vor dem Anschweissen stirnseitig, am Aussendurchmesser und am Innendurchmesser überarbeitet wird. Es ist vorteilhaft, wenn der Anschlussstutzen des Ventilkörpers am Aussen- und Innendurchmesser wie auch an der Stirnseite überdreht wird, wodurch die Gusshaut entfernt wird. Vorzugsweise wird durch das Überdrehen eine Zentrierung für das Anschlussstück gebildet. Als vorteilhafte Ausführung hat sich gezeigt, wenn in der Stirnseite des Ventilkörpers eine Abstufung eingearbeitet wird und im Anschlussstück entsprechend die gegengleiche Abstufung, wodurch das Anschlussstück zentriert und genau positioniert wird, wobei diese Abstufung die Bereiche der Kontaktflächen bilden, die als Ringflächen an der Stirnseite zu erkennen sind. Nach der Verschweissung erstreckt sich der Schweisskegel über die Verbindungsstelle und verschmilzt die Konturen des Anschlussstücks und des Ventilkörpers. Es ist vorteilhaft, wenn der Laser während des Schweissens in der Ebene rechtwinklig zur Längsachse angeordnet ist und rechtwinklig auf den Umfang des Anschlussstücks gerichtet ist. Diese Ausführungsform des Verfahrens ist dann anzuwenden, wenn die Kontaktflächen bzw. ein Bereich der Kontaktflächen rechtwinklig zur Längsachse verlaufen. Dadurch entsteht eine einwandfreie Schweissnaht. An Stellen an denen eine solche Ausrichtung auf einen kreisförmigen Umfang nicht möglich ist, hat es sich gezeigt, dass es vorteilhaft ist, wenn Nasen an den Anschlussstücken angeordnet sind, da auf diese Flächen der Laser rechtwinklig ausgerichtet werden kann wenn der Umfang sonst nicht zugänglich ist.

Vorzugsweise weist während des Schweissens, der Laser einen Winkel α auf, der dem Winkel α entspricht der zwischen einem Bereich der Kontaktfläche und der Längsachse des Anschlussstücks liegt. Dadurch wird gewährleistet, dass der Laser immer parallel mit zumindest einem Bereich der Kontaktflächen verläuft, was eine optimale Verschweissung gewährleistet.

Als vorteilhaft hat sich gezeigt, wenn durch das Überarbeiten der Stirnseiten eine Zentrierung gebildet wird, wobei die Zentrierung komplett verschweisst wird.

Als vorteilhaft hat sich gezeigt, wenn das Anschlussstück mittels eines Lasers im Wellenlängenbereich von 400 - 550nm, vorzugsweise mit blauer Wellenlänge von 420-470nm an den Ventilkörper angeschweisst wird. Mit dieser kurzen Wellenlänge wird eine hohe Absorption von Laserstrahlung vor allem bei einer Kupferlegierung erreicht. Durch die vielfach höhere Absorption wird eine qualitativ hochwertige und gleichmässige Schweissnaht erzielt. Vorzugsweise wird eine Laserleistung zwischen 2KW und 4KW angestrebt. Des Weiteren wird eine Spot in Spot Technology für einen variablere Lasereinwirkung bevorzugt. Bei der Spot in Spot Technology handelt es sich um eine Lasertechnology, bei der der Laserstrahl in mehrere Laserstrahlen geteilt wird, die unabhängig voneinander regel- und einstellbar sind. Neben der Geometrie der Laserstrahlen können auch die Abstände sowie die Intensitäten der einzelnen Strahlen eingestellt werden, was die Qualität der Schweissnaht wesentlich verbessert.

Vorzugsweise ist das Anschlussstück aus Edelstahl oder einer Kupferlegierung hergestellt und wird an den Ventilkörper aus einer Kupferlegierung angeschweisst. Dies ermöglicht eine hohe Flexibilität in der Bauteilkombination.

Als bevorzugte Ausführungsform hat sich gezeigt, wenn ein Anschlussstück mit Aussengewinde oder Innengewinde an den Ventilkörper angeschweisst wird. Dies ermöglicht das Anschliessen einer Rohrleitung über eine Gewindeverbindung. Es ist vorteilhaft, wenn das Gewinde bereits am Anschlussstück vorgesehen ist, bevor das Anschlussstück an den Ventilkörper angeschweisst wird.

Als bevorzugte Ausführungsform hat sich gezeigt, wenn ein Anschlussstück das als Nippel, Presshülse oder Hülse ausgebildet ist an den Ventilkörper angeschweisst wird. Dadurch kann eine Rohrleitung über eine Steckverbindung oder Pressverbindung mit dem Ventilelement verbunden werden.

Als vorteilhaft hat sich gezeigt, wenn zum Anschweissen des Anschlussstücks eine Schweissbadsicherung verwendet wird. Diese verhindert, dass die Schweisswurzel zu stark nach innen wandert und ermöglicht die Bildung einer kompakten Schweissnahtwurzel.

Vorzugsweise wird zur Schweissbadsicherung ein Dorn in das Anschlussstück eingeführt. Der Dorn ragt vorzugsweise in den Anschlussstutzen hinein und weist vorzugsweise im Bereich der Schweissnaht einen verjüngten Durchmesser auf an dem sich die Schweissnaht abstützt bzw. durch diesen begrenzt wird. Vorzugsweise ist der Dorn aus Keramik oder einem anderen Material, das eine entsprechende Beschichtung aufweist, gebildet.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:
Fig. 1 eine Schnittansicht eines erfindungsgemässen Ventilelements mit einem Anschlussstück, das ein Aussengewinde aufweist,
Fig. 2 eine Schnittansicht eines erfindungsgemässen Ventilelements mit einem Anschlussstück, das ein Innengewinde aufweist,
Fig. 3 eine Schnittansicht eines erfindungsgemässen Ventilelements mit einem Anschlussstück. das eine Presshülse aufweist,
Fig. 4 eine Schnittansicht eines erfindungsgemässen Ventilelements mit einem Anschlussstück, das einen Nippel aufweist,
Fig. 5 eine Teilschnittansicht eines Anschlussstutzens eines Ventilkörpers eines erfindungsgemässen Ventilelements,
Fig. 6 unterschiedliche Konturen der Anschlussstelle zwischen Ventilkörper und Anschlussstück,
Fig. 7 eine Schweissstelle mit ersichtlicher Kontur der Anschlussstelle vor dem Schweissverfahren und die danach gebildete Schweissnaht.
Fig. 8 eine Schnittansicht eines erfindungsgemässen Ventilelements mit einem Anschlussstück in den eine Dorn eingeführt ist,
Fig. 9 einen Ausschnitt eines eingeführten Dorns als Schweissbadsicherung,
Fig. 10 eine Ansicht der Ausrichtung des Lasers,
Fig. 11 der Winkel in dem der Laser gegenüber der Kontur verläuft und
Fig. 12 die Ausrichtung des Lasers bei mehreren in Reihe angeordneten Ventilelementen.

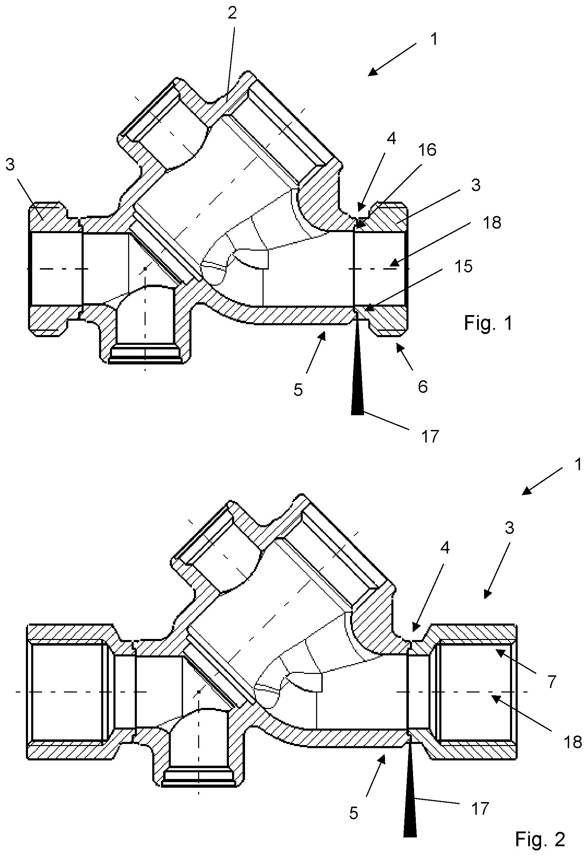

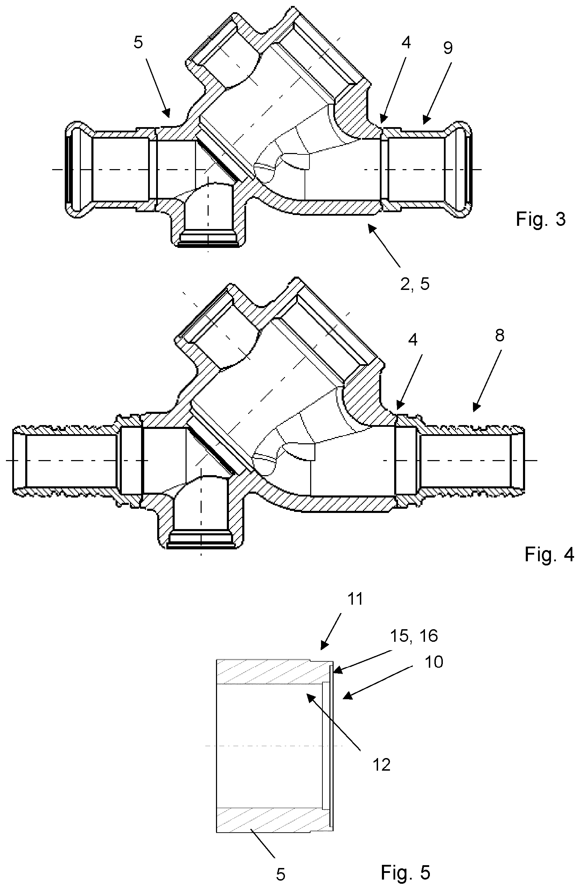

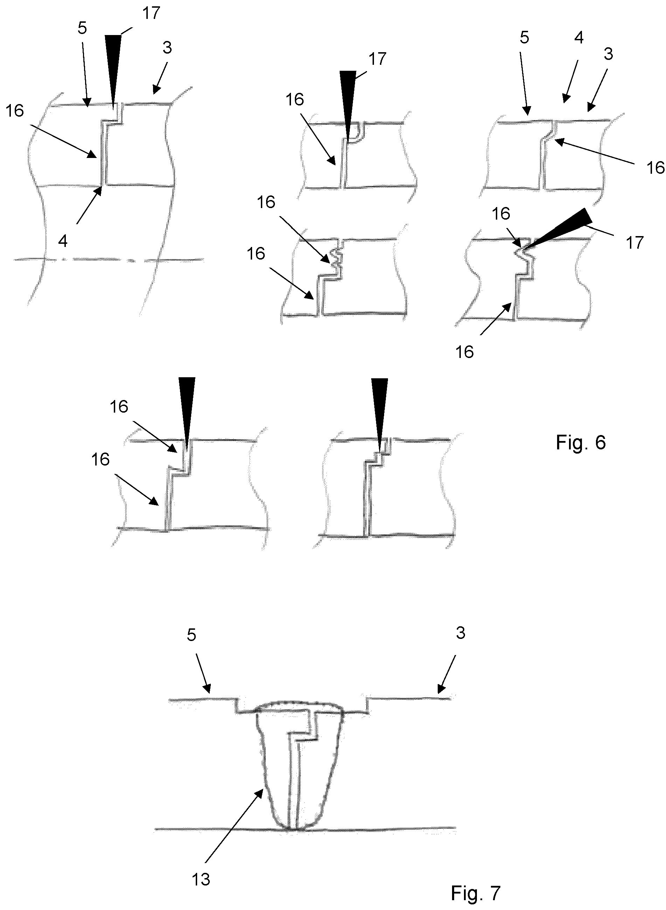

Die in Fig. 1 dargestellte Zeichnung zeigt ein erfindungsgemässes Ventilelement 1 für trinkwasserführende Rohrleitungssysteme. Das Ventilelement 1 weist einen Ventilkörper 2 auf, der im Giessverfahren hergestellt wird. Beispielsweise kann der Ventilkörper 2 im Kokillengussverfahren oder in einem Druckgussverfahren hergestellt werden. Vorzugsweise ist der Ventilkörper 2 aus einer Kupferlegierung hergestellt. An den Anschlussstutzen 5 des Ventilköpers 2 wird jeweils ein separat ausgebildetes Anschlussstück 3 durch Schweissen angebracht. Das Anschlussstück 3 wird vor dem Anschweissen in einem beliebigen Herstellverfahren hergestellt, es kann ebenfalls gegossen sein, wie auch durch ein abtragendes Herstellungsverfahren wie Drehen oder Fräsen hergestellt worden sein. Ebenso ist die Herstellung des Anschlussstücks 3 durch eine auftragendes Herstellverfahren wie 3D-Druck oder Sintern denkbar, wie auch die Herstellung durch einen Blechverarbeitungsprozess wie Pressen, Biegen, Stanzen oder Tiefziehen möglich ist. Vor dem Anschweissen des Anschlussstücks 3 am Ventilkörper 5 wird am Anschlussstutzen 5 bzw. an der Schweissstelle 4 die Gusshaut entfernt. Falls das Anschlussstück 3 ebenfalls durch Giessen hergestellt wurde, wird vorzugsweise auch am Anschlussstück 3 die Gusshaut im Bereich der Schweissstelle entfernt. Entfernen der Gusshaut bedeutet, dass ein Teil der Oberfläche des rohen Gussteils im Bereich der Schweissstelle abgetragen wird. Es ist vorteilhaft wenn die Oberfläche an der Schweissstelle so weit abgetragen wird, dass eine weitgehend homogene Materialstruktur und/oder eine definierte Kontur ersichtlich wird. Beispielsweise kann die Oberfläche des rohen Gussteils an der Schweissstelle um bis zu 1mm abgetragen werden. Die Bearbeitung dient vorteilhaft dazu, Verunreinigungen an der Oberfläche in Folge des Giessprozesses zu beseitigen, damit diese nicht in das Schweissbad hineingezogen werden. Dies ermöglicht es, eine optimale Schweissqualität zu gewährleisten. Des Weiteren ist der Laser 17 parallel zu mindestens einem Bereich 16 der Kontaktflächen 15 ausgerichtet. In den Fig. 1 und 2 ist der Laser 17 parallel zum senkrecht zur Längsachse 18 verlaufenden Bereich 16 der Kontaktfläche ausgerichtet. Fig. 5 zeigt den Anschlussstutzen 5 des Ventilkörpers 2 bei dem die Gusshaut entfernt wurde und die Bereiche 16 der Kontaktflächen 15 hauptsächlich senkrecht zur Längsachse 18 verlaufen. Gut ersichtlich ist, dass die Stirnseite 10 des Anschlussstutzens sowie der Aussendurchmesser 11 und Innendurchmesser 12 bearbeitet wurden, um die aussenliegende Gusshaut zu entfernen. Anschliessend wird das Anschlussstück 3 mit einem Laser mit blauer Wellenlänge von 420-470nm an den Ventilkörper 2 angeschweisst. Diese Wellenlänge ermöglicht eine hohe Absorption von Laserstrahlung, insbesondere bei Kupferlegierungen, und führt zu einer qualitativ hochwertigen und gleichmässigen Schweissnaht. Vorzugsweise wird eine Laserleistung zwischen 2KW bis 4KW angestrebt. Des Weiteren wird eine Spot in Spot Technology für einen variablere Lasereinwirkung bevorzugt. Die Figuren 1-4 zeigen mögliche Ausführungsformen von Anschlussstücken 3, die an einen Ventilkörper 2 angeschweisst werden können. Fig. 1 zeigt eine mögliche Ausführungsform, bei der ein Anschlussstück 3, das ein Aussengewinde 6 aufweist, angeschweisst wird, wobei das Aussengewinde 6 vorzugsweise vor dem Anschweissen des Anschlussstücks 3 am Anschlussstück 3 angeordnet wurde. Fig. 2 zeigt eine Ausführungsform des Anschlussstücks 3 mit Innengewinde 7, das vorzugsweise vor dem Anschweissen am Anschlussstück 3 angeordnet wurde. Als weitere mögliche Ausführungsform eines Ventilelements 1 wird eine Presshülse 9 oder eine Hülse am Ventilkörper 2 angeschweisst, ersichtlich in Fig. 3. Ebenso ist eine Ausführungsform mit einem angeschweissten Nippel 8 denkbar, siehe Fig. 4. Als vorteilhafte Materialkombination hat sich gezeigt, wenn das Anschlussstück 3 aus einem Edelstahl oder einer Kupferlegierung gebildet ist und der Ventilkörper aus einer Kupferlegierung besteht. In Fig. 6 sind mögliche Ausführungsformen der bearbeiteten Stirnseiten 10 gezeigt, die mit dem Anschlussstück 3 verschweisst wird. Gut ersichtlich sind die Bereiche 16 der Kontaktfläche 15 an den beiden Stirnseiten 10. Der Laser 17 verläuft zur Verschweissung parallel zu einem dieser Bereiche. Beispielhaft ist der Laser 17 in der zur ersten Abbildung senkrecht auf die Längsachse 18 gerichtet. Als weiteres Beispiel ist in der fünften Abbildung der Laser 17 geneigt zur Längsachse 18 dargestellt und somit parallel zum schräg verlaufenden Bereich 16. Wobei bei dieser Variante der Schweissstelle 4 der Laser 17 aufgrund des senkrecht zur Längsachse 18 verlaufenden Bereichs 16 der Laser 17 auch senkrecht ausgerichtet werden kann. Beim Verschweissen bildet sich ein Schweisskegel 13 an der Stelle der Kontaktflächen 15 zwischen Anschlussstutzen 5 und Anschlussstück 3, wobei der Schweisskegel 13 die beiden Teile mittels einem Stoffschluss verbindet, der sich in Form einer ringsum verlaufenden Schweissnaht an der Schweissstelle zeigt. Die Stirnseite 10 von Ventilkörper 2 und Anschlussstück 3 sind vorzugsweise konzentrisch ausgebildet, um eine Zentrierung zu gewährleisten.

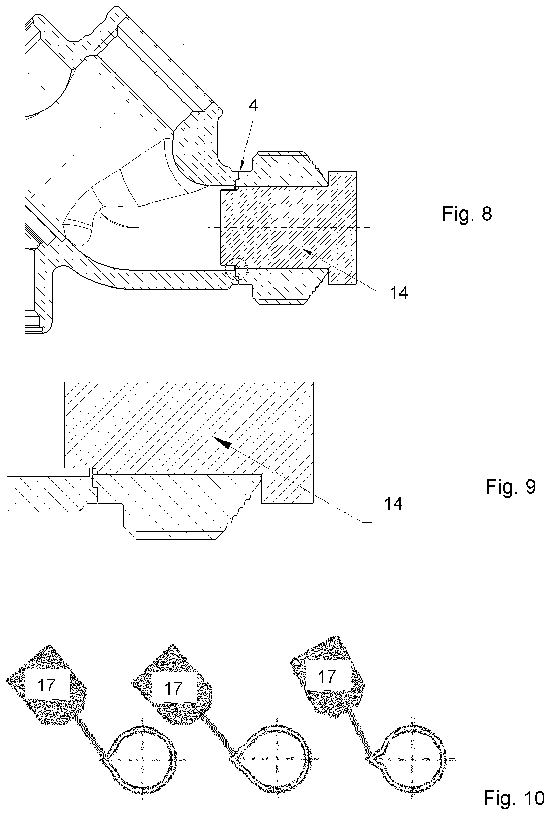

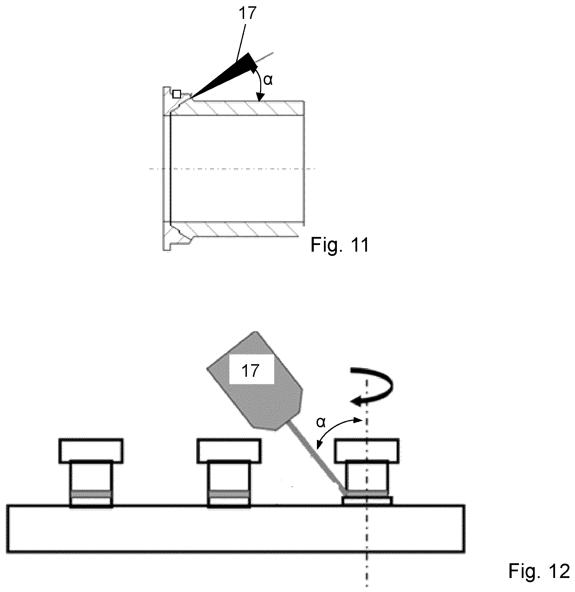

Fig. 8 zeigt einen zum Schweissen eingeführten Dorn 14 der als Schweissbadsicherung dient. Dadurch wird verhindert, dass die Schweissnaht sich zu stark ausbreitet. Es ist vorteilhaft, wenn der Dorn 14 am Innendurchmesser des Anschlussstücks 3 anliegt und der Teil des Dorns 14, der in den Anschlussstutzen 5 ragt, einen geringeren Durchmesser aufweist, so dass im Anschlussstutzen ein zumindest abschnittsweise umlaufender Spalt zwischen Dorn und Anschlussstutzen 5 vorliegt. Der Dorn 14 dient als Schweissbadsicherung und stützt die Schweissnaht und verhindert zudem, dass die Schmelze der Schweissnaht zu weit in das Bauteilinnere fliesst, wodurch die Innenform des Anschlussstutzens 5 und des Anschlussstücks 3 weitgehend beibehalten wird. Vorzugsweise besitzt das Ventilelement 1 gemäss des vorliegenden Verfahrens entlang der Schweissstelle 4 am Innendurchmesser eine leichte Querschnittverengung. Vorzugsweise ist der Innendurchmesser an der Querschnittverengung maximal 5% kleiner als der direkt anschliessende Innendurchmesser des Ventilkörpers oder des Anschlussstücks. Eine Schweissbadsicherung mit Hilfe eines solchen Dorns 14 ist nicht in allen Fällen erforderlich, ermöglicht jedoch in vorteilhafter Weise, die Innengeometrie des Ventilkörpers 2 an der Schweissstelle zu definieren und ohne Spalt zwischen Ventilkörper und Anschlussstück zu gestalten, wie in Fig. 9 gut ersichtlich ist. Fig. 10 zeigt eine besonders vorteilhafte Laserführung während des Schweissvorgangs. Gut ersichtlich ist hier, dass der Laser während des Schweissvorgangs weitgehend senkrecht auf den Außenumfang des Anschlussstücks 3 gerichtet ist. An den Stellen, die für den Laser nicht zugänglich wären, wenn eine ausschliesslich zylindrische Außenkontur vorliegen würde, hat es sich als vorteilhaft gezeigt, wenn eine Nase am Aussenstück 3 angeordnet ist, auf die der Laser 17 dann weitgehend senkrecht gerichtet werden kann. Fig. 11 zeigt eine vorteilhafte Ausführungsform eines Anschlussstücks 3 bei dem der Laser 17 in einem Winkel α zur Längsachse 18 ausgerichtet ist, während ein zu verschweissender Ventilkörper mit Anschlussstück 3 und Anschlussstutzen 5 um die Längsachse des Anschlussstücks 3 gedreht wird. Die sich gegenüberliegenden Kontaktflächen 15 von Anschlussstück 3 und Anschlussstutzen 5 sind in Fig. 11 gegenläufigen Schrägen ausgebildet bzw. Kontaktbereiche 16 die als konische Ringflächen ausgebildet sind. Die einander gegenüberliegenden Kontaktflächen der konusförmigen Aussenkontur und der konusförmigen Innenkontur definieren weisen einen Winkel α zur Längsachse 18 auf. Der Laser 17 zum Verschweissen der Kontaktflächen 16 wird ebenfalls in einem Winkel α zur Längsachse 18 angeordnet wodurch der Laser 17 parallel zu den Kontaktbereichen 16 verläuft. Der Konuswinkel macht es möglich, dass der Laserstrahl jeweils parallel zu den einander gegenüberliegenden Kontaktbereichen 16 in das Material eintritt, wodurch der Anschlussstutzen 5 und das Anschlussstück 3 optimal miteinander verschweisst werden, selbst an schlecht zugänglichen Stellen. Dabei dringt der Laserstrahl parallel zu den Kontaktbereichen 16 tief in die beiden Bauteile ein, um die stoffschlüssige Verbindungsfläche zu maximieren. In Fig. 12 ist der Verlauf des Lasers 17 nochmals in Kombination mit einer Schweissbadsicherung in Form eines Dorns 14 aufgezeigt, der darüber hinaus auch eine stabile Zentrierung während des Schweissvorgangs bietet. Gut ersichtlich ist der Winkel α, in dem der Laser geführt wird. Prinzipiell ist es auch möglich, konusförmig ineinandergreifende Kontaktflächen von Anschlussstutzen 5 und Anschlussstück 3 mit zusätzlichen Stufen oder Verzahnungen zu kombinieren, wie in Fig. 6 gezeigt. Der Laser 17 wird dann vorzugsweise parallel zu einer der Bereiche 16 der Kontaktflächen 15 ausgerichtet.

### Bezugszeichenliste

- 1: Ventilelement
- 2: Ventilkörper
- 3: Anschlussstück
- 4: Schweissstelle
- 5: Anschlussstutzen
- 6: Aussengewinde
- 7: Innengewinde
- 8: Nippel
- 9: Presshülse
- 10: Stirnseite
- 11: Aussendurchmesser
- 12: Innendurchmesser
- 13: Schweisskegel
- 14: Schweissbadsicherung / Dorn
- 15: Kontaktflächen der Stirnseiten
- 16: Bereich der Kontaktflächen der Stirnseiten
- 17: Laser
- 18: Längsachse Anschlussstück

## Patentansprüche

1. Verfahren zum Herstellen eines Ventilelements (1) für trinkwasserführende Rohrleitungssysteme, wobei das Ventilelement (1) einen Ventilkörper (2) und mindestens ein Anschlussstück (3) aufweist, wobei der Ventilkörper (2) durch Giessen als separates Bauteil vorgefertigt wird und das Anschlussstück (3) in einem beliebigen Fertigungsverfahren als separates Bauteil vorgefertigt und anschliessend mittels der Stirnseite (10) an der Stirnseite (10) des Ventilkörpers (2) angeschweisst wird, wobei das Anschlussstück (3) und der Ventilkörper (2) sich über Kontaktflächen (15) der Stirnseiten (10) kontaktieren **dadurch gekennzeichnet, dass** ein Laser (17) zum Anschweissen des Anschlussstücks (3) zu mindestens einem Bereich (16) der Kontaktflächen (15) der Stirnseiten (10) parallel verläuft.

2. Verfahren nach Anspruch 1, **dadurch gekennzeichnet, dass** am Ventilkörper (2) die Schweissstelle (4) vor dem Anschweissen des Anschlussstücks (3) zum Entfernen einer Gusshaut stirnseitig (10), am Aussendurchmesser (11) und am Innendurchmesser (12) überarbeitet wird.

3. Verfahren nach einem der Ansprüche 1 oder 2, **dadurch gekennzeichnet, dass** das Anschlussstück (3) mittels eines Lasers im Wellenlängenbereich von 400-550nm an den Ventilkörper (2) angeschweisst wird, vorzugsweise im blauen Wellenlängenbereich von 420 - 470nm.

4. Verfahren nach einem der Ansprüche 1 bis 3, **dadurch gekennzeichnet, dass** das Anschlussstück (3) aus Edelstahl oder einer Kupferlegierung besteht und an den Ventilkörper (2) aus einer Kupferlegierung angeschweisst wird.

5. Verfahren nach einem der Ansprüche 1 bis 4, **dadurch gekennzeichnet, dass** ein Anschlussstück (3) mit einem Aussengewinde (6) oder Innengewinde (7) an den Ventilkörper (2) angeschweisst wird.

6. Verfahren nach einem der Ansprüche 1 bis 5, **dadurch gekennzeichnet, dass** ein Anschlussstück (3) das als Nippel (8), Presshülse (9) oder Hülse ausgebildet ist, an den Ventilkörper (2) angeschweisst wird.

7. Verfahren nach einem der Ansprüche 1 bis 6, **dadurch gekennzeichnet, dass** durch das Überarbeiten der Stirnseiten eine Zentrierung gebildet wird, vorzugsweise eine konusförmige Zentrierung, wobei die Zentrierung komplett verschweisst wird.

8. Verfahren nach einem der Ansprüche 1 bis 7, **dadurch gekennzeichnet, dass** zum Anschweissen eine Schweissbadsicherung (14) verwendet wird.

9. Verfahren nach Anspruch 8, **dadurch gekennzeichnet, dass** ein Dorn (14) in das Anschlussstücks (3) eingeführt wird, der als Schweissbadsicherung dient.

10. Verfahren nach einem der Ansprüche 1 bis 9, **dadurch gekennzeichnet, dass** der Laser (17) während des Schweissens in der Ebene rechtwinklig zur Längsachse (18) angeordnet ist und rechtwinklig auf den Umfang des Anschlussstücks (3) gerichtet ist.

11. Verfahren nach einem der Ansprüche 1 bis 10, **dadurch gekennzeichnet, dass** der Laser während des Schweissens einen Winkel α aufweist, der dem Winkel α entspricht der zwischen einem Bereich der Kontaktfläche und der Längsachse (18) des Anschlussstücks (3) liegt.

12. Verfahren nach Anspruch einem der Ansprüche 1 bis 11, **dadurch gekennzeichnet, dass** der vor dem Anschweissen des Anschlussstücks (3) an den Ventilkörper (2) die Gusshaut im Bereich der Schweissstelle (4) zwischen Anschlussstück (3) und Ventilkörper (2) am Ventilkörper (2) entfernt wird.
